# NEUE EUROPÄISCHE PATENTSCHRIFT

(11) **EP 2 473 298 B2**
(45) Veröffentlichungstag und Bekanntmachung des Hinweises auf die Entscheidung über den Einspruch: **31.10.2018**
(45) Hinweis auf die Patenterteilung: 11.11.2015
(21) Anmeldenummer: 10752556.0
(22) Anmeldetag: 03.09.2010
(51) Int. Cl.: F16C 13/02, B22D 11/128

(54) **ROLLE UND ROLLENANORDNUNG FÜR EINE STRANGGIESSANLAGE**
ROLLER AND ROLLER ASSEMBLY FOR A CONTINUOUS CASTING DEVICE
ROULEAUX ET ASSEMBLAGE DE ROULEAUX POUR UNE INSTALLATION DE COULÉE CONTINUE

(30) Priorität: 04.09.2009 DE 102009040117; 24.11.2009 DE 102009047079
(43) Veröffentlichungstag der Anmeldung: 11.07.2012
(73) Patentinhaber: Georg Springmann Industrie- und Bergbautechnik GMBH, 45472 Mülheim an der Ruhr (DE); SMS Concast AG, 8027 Zürich (CH)
(72) Erfinder: DRATVA, Christian, CH-8052 Zürich (CH); SPRINGMANN, Georg, 45470 Mülheim a. d. Ruhr (DE); HASSELBRINK, Dirk, 47059 Duisburg (DE); WARMBIER, Dieter, 47441 Moers (DE); NOBBE, Matthias, 45470 Mülheim (DE)
(74) Vertreter: Nobbe, Matthias
(86) Internationale Anmeldenummer: PCT/EP2010/062997
(87) Internationale Veröffentlichungsnummer: WO 2011/026957

(56) Entgegenhaltungen:
- EP-A1- 1 048 880
- WO-A1-02/43902
- AT-B- 327 294
- DE-A1- 1 583 619
- DE-A1- 2 423 224
- DE-A1- 3 823 655
- DE-A1- 10 316 673
- DE-A1-102005 052 067
- DE-C1- 19 541 131
- JP-A- H05 115 951
- JP-A- S61 189 854
- JP-U- S6 410 353

## Beschreibung

Die Erfindung betrifft eine Rollenanordnung sowie eine Strangführungseinheit unter Verwendung der erfindungsgemäßen Rollenanordnung für eine Stranggiessanlage.

In Stranggiessanlagen zum Giessen von Metallsträngen werden drehgelagerte Rollen eingesetzt, welche die Aufgabe haben, den Metallstrang nach dem Verlassen der Kokille entlang einer vorgegebenen Bahn zu führen und zu kühlen und gegebenenfalls zu stützen. Die Rollen sind dabei außen über Zapfen in einem Lagerbock mittels Lagern gelagert und werden in einem geschlossenem Kreislauf durch Zuführung eines Kühlmittels (insbesondere Wasser) unter Druck in das Innere der Rolle zur Abführung der Wärme gekühlt, was beispielsweise über die Wasserführung über eine durch die Zapfen geführte axiale Rollenbohrung realisierbar ist.

Die Stützung und/oder Führung des Metallstranges kann je nach Giessformat und Position allseitig, von gegenüberliegenden Seiten des Stranges oder nur von der Strangunterseite erfolgen. Dementsprechend werden die Rollen in unterschiedlichen Anordnungen, wie Rollenkränzen, versetzten Doppelrollen, mehrfach abgestützten Längsrollen oder als einfache Rollen eingesetzt.

Die Rollen, insbesondere die Rollenmäntel und Lager, sind im Betrieb extremer Hitzebelastung durch direkten Kontakt mit dem glühenden Metallstrang und vor allem durch die Strahlungswärme ausgesetzt. Dies gilt insbesondere für Rollen im Stegbereich bei Beam-blank-Profilen. Hinzu kommt die aggressive Umgebung, hervorgerufen durch mit Giesspulverresten kontaminiertes Wasser sowie durch Wasserdampf, Zunder etc.

Vielfach sind enge Abstände zwischen den benachbarten Rollen und folglich kleine Durchmesser der Rollen erforderlich, um den Giessstrang effizient zu stützen, was die Beanspruchung der Rollen zusätzlich erhöht.

Solche engen Abstände zu benachbarten Strängen sowie andere Komponenten der Giessanlage, wie Kühlelemente oder elektromagnetische Rührwerkseinrichtungen verlangen eine möglichst kompakte Bauweise der Rollenführungen. Dennoch müssen die eingesetzten Rollen und deren Rollenanordnung eine hohe Zuverlässigkeit und eine lange Lebensdauer besitzen sowie eine einfache Wartung erlauben.

Die im Stand der Technik bekannten Lösungen mit Lagerböcken an beiden Enden des meist wassergekühlten Rollenkörpers und einer am Lagerbock montierten separaten Drehdurchführung erfüllen die zuvor erwähnten Anforderungen oft nur unzureichend.

Eine Ausführung einer Rollenanordnung ist aus der DE 102005052067 bekannt. Dabei ist die Rolle über Zapfen in einem Lagerbock mittels Wälzlagern gelagert und Ober wenigstens eine durch die Zapfen geführte axiale Rollenbohrung und eine an dem Walzenzapfen zum Ankuppeln an die axiale Walzenbohrung druckdicht festlegbaren Dichteinheit mit einem Kühlmittel versorgbar.

Weitere Beispiele für solche im Stand der Technik bekannten Rollenanordnungen sind aus der DE19752336C1 und EP857258 A1 bekannt. Bei solchen Ausführungen ist insbesondere die Kühlung der Lagerbereiche oft nicht ausreichend. Eine weitere Rollenanordnung ist aus der DE-OS 1583619 bekannt.

Der vorliegenden Erfindung liegt die Aufgabe zugrunde, eine Rollenanordnung bereitzustellen, die eine hocheffiziente Kühlung der Rollenlagerung und des Rollenmantels bei gleichzeitig kompakter und belastbarer Bauweise gewährleistet sowie kostengünstig herstellbar ist.

Diese Aufgabe wird gemäß den Merkmalen der Patentansprüche 1 und 2 dadurch gelöst, dass eine mit einem Kühlmedium versorgbare zapfenlose Rolle für eine Stranggiessanlage, mit einem rotationssymmetrischen Rollenmantel zur Aufnahme von Kühlmedium und mit mindestens einem Rolleneinsatzstück, an dem eine Aufnahme für ein auf einem Lagerbockzapfen getragenes Rollenlager ausgebildet ist, wobei das Rolleneinsatzstück innerhalb des Rollenmantels angeordnet und daran druckdicht festgelegt ist, wobei Rolleneinsatzstück (5) und Rollenmantel (6) einen Hohlraum (11) zur Aufnahme des Kühlmedium ausbilden, in der erfindungsgemäßen Rollenanordnung verwendet wird.

Die Rolle zeichnet sich insbesondere dadurch aus, dass die Rollenlageraufnahme und im Betriebszustand somit auch das Rollenlager innerhalb des Rollenmantels, der im Betrieb der Stranggiessanlage, eines Walzwerkes oder eines Kalanders o.ä., mit einem Kühlmedium wie Wasser versorgt wird, angeordnet ist und der Raum zur Aufnahme des Kühlmediums sich zumindest teilweise umfangsmäßig zwischen Rollenlageraufnahme und Rollenmantel erstreckt, so dass eine optimierte Kühlung des Lagerbereiches während des Betriebes der Anlage ermöglicht wird. Um eine kompakte Bauform zu ermöglichen, kann so auf Rollenzapfen verzichtet werden, und die Rolle wird über das in der Rollenlageraufnahme angeordnete Lager und einen am Lagerbock angeordneten Zapfen getragen. Aufgrund der optimierten Kühlung des Rollenmantels und der Lager ist es möglich, dass auf eine Sprühkühlung verzichtet werden und ein "Hot-Casting" bzw. "Dry-Casting" bei verbesserter Kühlung ohne das Auftreten von Brandrissen auf den Rollenoberflächen realisiert werden kann.

Infolge des gegenüber den im Stand der Technik bekannten Rollen reduzierten Rollengewichtes ist die durch den Rollenantrieb zu bewegende Rollenmasse verringert, und so können die Rollenantriebe konstruktiv kleiner und weniger leistungsstark ausgelegt werden, und so weiter Kosten gesenkt werden.

Das Rolleneinsatzstück ist in der Regel topfartig ausgebildet und bildet mit dem Rollenmantel einen Hohlraum aus, der im Betriebszustand der Rolle über ein oder zwei Kühlmediumkanäle zur Zu-bzw. Abführung mit Kühlmedium versorgt werden kann. So weist ein Rolleneinsatzstück zumindest einen Kühlmediumkanal auf, der in den ausgebildeten Hohlraum mündet. Somit wird erfindungsgemäß eine achsen- oder wellenlose Rollengestaltung ermöglicht.

Durch Ausgestaltung des Rollenmantels in zur Rollenachse rotationssymmetrischer Form kann im Betrieb der Rolle jede gewünschte Giessform des Stranges oder Knüppels gestützt und/oder geführt werden. So sind Strangformate mit gebogenem Querschnitt ebenso wie solche wellenförmigen Konturen herstellbar.

In der Regel ist das Lager in Form eines Wälz- oder Gleitlagers ausgebildet und in einer Spiel- oder Pressfassung in der Lageraufnahme angeordnet. Bei einer einfachen Kurzform der Rolle ist es ausreichend, wenn ein Lager in der Lageraufnahme nur an einem Ende der Kurzrolle angeordnet ist und das andere Ende der Kurzrolle mit einem Deckel verschlossen ist. Bei dieser Bauform wird die Kurzrolle über ein oder zwei Lager nur über einen Lagerbockzapfen von einem Lagerbock getragen, und dem von dem Rollenmantel umschlossenen Hohlraum wird das Kühlmedium über eine sogenannten Duo-Dichteinheit zu-, als auch abgeführt.

Der Lagerbockzapfen ist vorteilhaft einstückig mit dem Lagerbock ausgebildet. So kann der Lagerbock insgesamt, insbesondere im Feinguss, hergestellt und mittels Keramikkern und mechanischer Nachbearbeitung ein oder mehrere Kühlmediumkanäle sowie Bohrungen im Lagerbock vorgesehen werden. Bei Wahl entsprechender Legierungen lassen sich somit Lagerböcke mit höchster mechanischer Festigkeit herstellen, die trotz kompakter Bauform auch mit einer Innenkühlung versehen sein können.

Anstelle eines einstückigen Lagerbockes mit Lagerbockzapfen ist grundsätzlich auch eine Ausführung des Lagerbockes in Form einer wasserführenden Lagerstütze mit einem rohrförmigen Lagerzapfen möglich, wobei das Rollenlager auf dem rohrförmigen Lagerzapfen gelagert ist und der rohrförmige Lagerzapfen mit der Lagerstütze kühlmediumführend kuppelt.

Bei längeren Rollen, die an beiden Enden getragen werden, ist entsprechend ein zweites am anderen Ende der Rolle angeordnetes Rolleneinsatzstück, an dem eine Aufnahme für ein auf einem Lagerbockzapfen getragenes Rollenlager ausgebildet ist, vorhanden, wobei das zweite Rolleneinsatzstück ebenso innerhalb des Rollenmantels angeordnet und daran druckdicht festgelegt ist und wobei die beiden Rolleneinsatzstücke und Rollenmantel einen Hohlraum zur Aufnahme des Kühlmediums ausbilden. So kann die Rolle an beiden Enden von je einem Lagerbock getragen werden.

Somit werden bei Betrieb der Rolle sowohl das Rollenlager, als auch die zugeordnete Dichteinheit, die bevorzugt im Rollenmantel und besonders bevorzugt vom Rollenlager radial beabstandet umfasst angeordnet ist, durch das Kühlmedium besser als bei herkömmlichen Rollen gekühlt, da die mit dem Kühlmedium rolleninnenseitig in Kontakt stehenden Oberflächen die Wärme besser an das Kühlmedium abgeben können.

Zu Vereinfachung der Fertigung und Optimierung der Wasserführung ist die Lageraufnahme in dem Rolleneinsatzstück angeordnet, das am Rollenmantel druckdicht festgelegt ist. Dazu wird das Rolleneinsatzstück in den Rollenmantel eingeschoben und umlaufend am Rand mit dem Rollenmantel so verschweißt, wobei das Rolleneinsatzstück bevorzugt nahezu bündig mit dem Rollenende abschließt. Dies kann bei einer Kurzrolle wie oben beschrieben mit einem Lager und einem Rolleneinsatzstück nur an einem Rollende und ebenso bei einer längeren Rolle mit zwei Lagern und je einem Rolleneinsatzstück an jedem Rollenende Anwendung finden.

In einer Ausführungsform wird im Betriebszustand die Rolle an beiden Enden über ein in dem jeweiligen Rolleneinsatzstück aufgenommenes Rollenlager auf dem zugeordneten Lagerbockzapfen, der aus Gründen der Festigkeit und der Fertigung wie oben angegeben einstückig mit dem Lagerbock ausgeführt sein kann, gelagert. Bei dieser Ausführungsform ist aufgrund der kompakten Bauform eine Anordnung mehrerer Rollenanordnungen (mindestens zwei) mit Rolle und Lagerbock dicht nebeneinander, auch in einer in etwa zur Strangachse lotrechten Ebene, auch mit benachbarten Rollen mit Drehachsen in einem Winkel von beispielsweise 90° zueinander, möglich.

Neben der Funktion als Lageraufnahme dient ein Rolleneinsatzstück auch der Führung des Kühlmediums, das in der Regel Kühlwasser ist. Dazu ist das Rolleneinsatzstück am Rollenmantel so ausgebildet und festgelegt, dass zwischen Rolleneinsatzstück und Rollenmantel ein Umfangskanal zur Aufnahme von Kühlmedium oder ein Teilstück im Umfang davon ausgebildet ist. Auf diese Weise wird sichergestellt, dass bei Betrieb der Rollenmantel von innen mit Kühlmedium beaufschlagt wird und zuverlässig der Wärmeabtransport gewährleistet und so eine Lagerüberhitzung vermieden wird. In einer besonders zur Wärmeabführung effektiven Ausführungsform ist der Umfangskanal so ausgebildet, daß der Zuführungskanal des Kühlmediums, beispielsweise ein radial verlaufender Kanal, in den Umfangskanal nur durch einen zum Rollenmantel abdichtenden Steg von dem Abführungskanal des Kühlmediums, der beispielsweise ein zur der Drehachse der Rolle parallel oder in einem Winkel zur Drehachse ausgebildeter Kanal sein kann, getrennt ist.

Eine Verbesserung der Kühlung wird erzielt, wenn der Umfangskanal, bevorzugt mittels eines Überführungskanals, mit dem vom Rollenmantel ausgebildetem Hohlraum für Kühlmedium kuppelt. Der Hohlraum kann dabei zur größenmäßigen Dimensionierung mit mindestens einem Füllkörper/Verdrängungskörper gefüllt sein, um die Menge des benötigten Kühlmediums in Abhängigkeit von der abzutransportierenden Wärme einzustellen und die Strömungsgeschwindigkeit zu erhöhen als auch das Kühlmedium im Hohlraum der Rolle leiten zu können. Auf diese Weise kann zum einen die Wärme besonders schnell abgeführt werden, zum anderen wird die dazu benötigte Menge an Kühlmedium verringert.

Bevorzugt ist das Rolleneinsatzstück so ausgebildet, dass es mindestens einen in bevorzugt radialer Richtung verlaufenden Kühlmediumkanal aufweist, der mit dem Umfangskanal kuppelt. Auf diese Weise kann das dem Rolleneinsatzstück zugeführte Kühlmedium dem Umfangskanal direkt zugeführt werden und kann von dort aus, bevorzugt mittels eines Überführungskanals, in den vom Rollenmantel umschlossenen Hohlraum eintreten.

Die erfindungsgemäße Ausgestaltung ermöglicht einen einfachen und schnellen Zusammenbau der Bauteile. Bei Zusammenbau einer Ausführungsform einer längeren Rolle werden an beiden Seiten des Rollenmantels die Rolleneinsatzstücke in den Rollenmantel eingesetzt und mit dem Rollenmantel ringsum verschweißt, so dass ein druckdichter Rollenkörper mit einem Kühlmittelraum zwischen Rolleneinsatzstücken und Rollenmantel ausgebildet wird. Dieser Rollenkörper wird im Betriebszustand bevorzugt über in den Rollenlageraufnahmen angeordnete Wälzlager von einem an jedem Ende des Rollenkörpers angeordneten Lagerbock getragen. So wird die Rolle über jeweils ein an jedem Ende der Rolle zwischen dem jeweiligen Rolleneinsatzstück und dem am Lagerbock angeordneten Lagerbockzapfen angeordnetes Wälzlager von dem Lagerbockzapfen am zugeordneten Lagerbock getragen.

Zwischen Rollenkörper und Lagerbockzapfen am Lagerbock ist zumindest eine Dichteinheit so zwischen Lagerbock und Rolleneinsatzstück angeordnet, dass der das Kühlmedium zuführende Kühlmittelkanal im Lagerbock an den korrespondierenden Kühlmittelkanal im Rolleneinsatzstück so druckdicht ankuppelt, dass der Rolle im Betrieb zugeführtes Kühlmedium über den Kühlmittelkanal im Rolleneinsatzstück dem im Rollenkörper ausgebildeten Kühlmittelraum zugeführt wird.

Dafür sind, je nach Ausführung nach Anspruch 1 oder 2, ein oder zwei Dichteinheiten vorgesehen, über die die Zuführung, bzw. Abführung von Kühlmedium in den Kühlmittelraum im Rollenkörper erfolgt. Bei einer Mono-Dichteinheit erfolgt dabei die Zuführung des Kühlmediums über die an einem Rollenende angeordnete Dichteinheit und die Abführung des Kühlmediums über die an dem anderen Rollenende angeordnete Mono-Dichteinheit.

Bei Verwendung einer sogenannten Duo-Dichteinheit in der erfindungsgemäßen Rollenanordnung weist das Rolleneinsatzstück einen ersten Kühlmittelkanal zur Zuführung des Kühlmediums in einen auf der Innenseite des Rollenmantels angeordneten Kühlmittelraum und einen zweiten Kühlmittelkanal zur Abführung des Kühlmediums aus diesem Kühlmittelraum auf. Dabei kuppeln diese Kühlmittelkanäle an einen Kühlmittelkanal zur Zuführung des Kühlmediums bzw. an einen Kühlmittelkanal zur Abführung des Kühlmediums jeweils in der Dichteinheit an.

In der Ausführungsform nach Anspruch 1 ist die erfindungsgemäße Rollenanordnung für eine Stranggiessanlage so ausgebildet, dass an einem Ende der Rolle zwischen Rolleneinsatzstück und Lagerbockzapfen eine druckdicht festlegbare Duo-Dichteinheit angeordnet ist, welche jeweils einen Kühlmittelkanal im Lagerbock an den jeweils einen korrespondierenden Kühlmittelkanal im Rolleneinsatzstück zur Zu-bzw. Abführung des Kühlmediums druckdicht ankuppelt und das andere Ende des Rollenmantels durch einen Deckel verschlossen ist.

DieseAusführungsform ist einseitig über nur einen Lagerbock gelagert und besonders als eine gekühlte Führungsrolle bei Strangprofilen mit komplexerer Querschnittsgeometrie wie bei Beamblank-Profilen infolge des verringerten Raumbedarfs dieser Ausführungsform einsetzbar.

In der Ausführungsform der Rollenanordnung nach Anspruch 2 ist an beiden Enden der Rolle jeweils eine Dichteinheit angeordnet. Genauer gesagt weist dann jedes dieser Rolleneinsatzstücke jeweils einen Kühlmittelkanal auf, wobei eines der Rolleneinsatzstücke einen Kühlmittelkanal zur Zuführung des Kühlmediums und das andere der Rolleneinsatzstücke einen Kühlmittelkanal zur Abführung des Kühlmediums aufweist. Dabei kuppeln diese Kühlmittelkanäle jeweils an den Kühlmittelkanal zur Zuführung des Kühlmediums in einer zugeordneten ersten Mono-Dichteinheit bzw. den Kühlmittelkanal zur Abführung des Kühlmediums in einer zugeordneten zweiten Mono-Dichteinheit so an, dass das der Rolle im Betrieb einenends zugeführte Kühlmedium über den Kühlmittelkanal im Rolleneinsatzstück dem auf der Innenseite des Rollenmantels angeordneten Kühlmittelraum zugeführt wird und anderenends über den Kühlmittelkanal zur Abführung des Kühlmediums aus dem Kühlmittelraum im Rolleneinsatzstück abgeführt wird.

Die Kühlung kann in der erfindungsgemäßen Rollenanordnung weiter verbessert werden, wenn in dem Lagerbock ein Hohlraum für Kühlmedium ausgebildet ist, der seriell zu der Rollenkühlung mit Kühlmedium oder in einem von der Rollenkühlung getrennten Kühlkreislauf mit Kühlmedium versorgt werden kann.

Für größere Strangformate wie Brammen kann es erforderlich sein, dass in einer Rollenanordnung mehr als eine Rolle nebeneinander, aber auf einer Drehachse angeordnet sind und je nach Rollenbreite mehrere Rollen pro Seite den Strang tragen. So weist eine Weiterbildung der erfindungsgemäßen Rollenanordnung mindestens einen weiteren Lagerbock, mindestens eine weitere von den Lagerböcken getragene Rolle auf, wobei zwischen benachbarten Rollen ein Lagerbock, der die benachbarten Rollen trägt, angeordnet ist und die mindestens zwei Rollen auf einer Drehachse liegen. Dabei ist an jedem Ende der Rollen zwischen Rolleneinsatzstück und Lagerbock eine druckdicht festlegbare Mono-Dichteinheit angeordnet, welche einen Kühlmittelkanal im Lagerbock an den jeweils einen korrespondierenden Kühlmittelkanal im Rolleneinsatzstück zur Durchführung des Kühlmediums druckdicht ankuppelt.

Bevorzugt ist dabei, wenn der zwischen den Rollen angeordnete Lagerbock einen von Kühlmedium durchströmbaren vorzugsweise strangseitig angeordneten Hohlraum aufweist und so eine verbesserte Kühlung der Lagerbereiche auf beiden Seiten des Lagerbockes erzielt wird.

Von besonderem Kostenvorteil sind eine Rolle und auch eine Rollenanordnung, bei der die Rolleneinsatzstücke baugleich sind. Um bei dieser baugleichen Ausführung eine optimierte Strömung im Kühlmittelraum zu erzeugen, sind die zwei Rolleneinsatzstücke bevorzugt um einen Winkel von bevorzugt 180° um die Rollenachse relativ zueinander verdreht in dem Rollenmantel angeordnet. Um den Zusammenbau und die Positionierung der Rolleneinsatzstücke in diesem Fall zu erleichtern, weisen die Rolleneinsatzstücke jeweils eine vorzugsweise Positionierungshilfen wie etwa eine vorzugsweise halbkreisförmige Positioniemase auf. Solche Positioniernasen können bevorzugt im montierten Zustand relativ zueinander um einen Winkel von vorzugsweise 180° um die Rollenachse verdreht angeordnet sein, so dass ein Zusammenbau der beiden Rolleneinsatzstücke nur in zueinander verdrehter und somit strömungsoptimierter Position erfolgen kann.

Bevorzugtweist die Dichteinheit eine elastische Hülse, vorzugsweise in Form eines Kompensators, auf, die auf dem Lagerbock oder in einem in dem Lagerbockzapfen angeordneten Gehäuseflansch druckdicht festgelegt ist. Die Anordnung kann auch seitenverkehrt erfolgen, dass die elastische Hülse auf dem Rolleneinsatzstück angeordnet ist

Bei Verwendung einer elastischen Hülse ist es dabei von besonderem Vorteil, wenn die Dichteinheit zwei aufeinander ablaufende Gleitringe als Dichtelemente aufweist, wobei der eine Gleitring von dem Rolleneinsatzstück und der andere Gleitring von der elastischen Hülse getragen wird. Auf diese Weise wird auf besonders einfache Weise gewährleistet, dass zunächst das Rolleneinsatzstück in den Rollenmantel eingesetzt und mit diesem verschweißt werden kann und in einem nächsten Schritt das Wälzlager, das bevorzugt auf dem Lagerbockzapfen, bevorzugt mit einer Presspassung angeordnet ist, zusammen mit dem Lagerbock in einer Fassung, vorzugsweise eine Spielpassung, auf Seiten des Rolleneinsatzstückes eingepasst wird. Bei dieser Ausführungsform wird gewährleistet, dass die auf die Dichteinheit einwirkenden Kippmomente und Längenausdehnung durch Temperaturgradient bei Belastung der Rolle im Betrieb infolge der radialen Beweglichkeit der Gleitringe und der Beweglichkeit der elastischen Hülse kompensiert werden und so die Lebensdauer der Vorrichtung erhöht wird.

Gemäß einer Ausführungsform ist in den wenigstens einen Kühlmittelkanal des Lagerbocks ein Verbindungsrohr zum Anschluss an eine an die Kühlmittelabfuhrund/oder Kühlmittelzufuhr gekuppelte Lagerbockaufstandsfläche einsetzbar, so dass der Anschluss an die bodenseitig geführten Kühlwasserzu- und -ableitungen gewährleistet ist.

Aufgrund der kompakten Ausführung der erfindungsgemäßen Rollenanordnung ist es möglich, die Rollenanordnungen gering beabstandet in einer Strangführungseinheit anzuordnen. Insbesondere ist es dabei von Vorteil, wenn die Drehachsen der Rollen der um den Strang angeordneten Rollenanordnungen einer Strangführungseinheit in einer Ebene liegen. Bevorzugt steht diese Ebene senkrecht zur Strangführungsrichtung.

Aufgrund der kompakten Bauform wird eine beschleunigte Wartung einer Strangführungseinheit oder eines Segmentes ermöglich. Dazu können die erfindungsgemäßen Rollenanordnungen aufgrund des gegenüber einer Rolle im Stand der Technik verringerten Gewichtes von der Befestigungsfläche gelöst werden und nach Abzug des Lagerbocks und des Lagers die Rolle bei Verschleiß schnell ausgetauscht und wieder zusammengebaut werden.

So ist erfindungsgemäß eine Strangführungseinheit mit mindestens vier Rollenanordnungen zur Führung von stranggegossenen Langprodukten mit rechteckigem wie einem quadratischem Querschnitt in kompakter Bauform ausführbar, und mehrere dieser Strangführungseinheiten können in geringem Abstand in einem Strangführungsegment angeordnet sein. Entsprechend kann eine Strangführungseinheit zur Führung von stranggegossenen Langprodukten mit doppel-T-förmigem Querschnitt vier Rollenanordnungen mit einseitig in einem Lagerbock gelagerten Kurzrollen und vier Rollenanordnungen mit beidseitig jeweils in einem Lagerbock gelagerten Langrollen aufweisen, die im Uhrzeigersinn abwechselnd um den Strang angeordnet sind und diesen führen.

Je nach gewünschtem Strangquerschnitt können um diesen herum Strangführungseinheiten angeordnet sein. Beispielsweise ist es bei einem runden Strangprofil möglich, mit nur zwei gegenüber angeordneten Rollenanordnungen und an den Strangquerschnitt angepassten rotationssymmetrischen Rollenmänteln den Strang zu führen und zu stützen.

Weitere Ausgestaltungen der Erfindung sind der nachfolgenden Beschreibung sowie den Unteransprüchen zu entnehmen.

Die Erfindung wird nachstehend anhand der in den beigefügten Abbildungen dargestellten Ausführungsbeispiele näher erläutert.

Es zeigen:
Figur 1 eine Querschnittsansicht einer ersten Ausführungsform der erfindungsgemäßen Rollenanordnung;
Figur 2 eine Querschnittsansicht einer zweiten Ausführungsform der erfindungsgemäßen Rollenanordnung;
Figur 3 eine Querschnittsansicht einer dritten Ausführungsform der erfindungsgemäßen Rollenanordnung;
Figur 4 eine Querschnittsansicht einer ersten Ausführungsform einer erfindungsgemäßen Strangführungseinheit; und
Figur 5 eine Querschnittsansicht einer zweiten Ausführungsform der erfindungsgemäßen Strangführungseinheit.

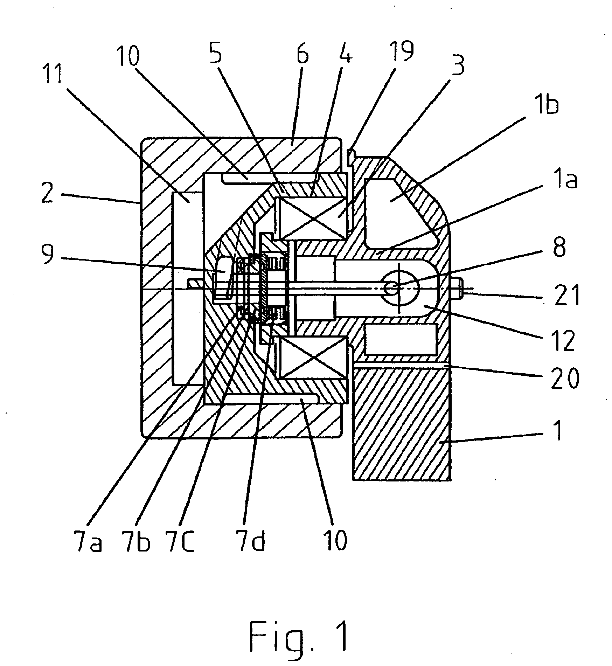

Wie in Fig. 1 gezeigt, weist die erfindungsgemäße Rollenanordnung für eine Stranggiessanlage einen Lagerbock 1 und eine von diesem Lagerbock 1 über den Lagerbockzapfen (1a) getragene Rolle 2 auf. Die Rolle 2 wird dabei über mindestens ein Lager 3, das in einer Lageraufnahme 4 im Rolleneinsatzstück 5 angeordnet ist, vom Lagerbock 1 über den Lagerbockzapfen 1 a getragen.

In dem zylindrischen Rollenmantel 6 der Rolle 2 ist axial zwischen dem Rolleneinsatzstück 5 und dem Lagerbock 1 eine druckdicht festlegbare Dichteinheit 7 (7a,7b,7c,7d) angeordnet, welche das Siphonrohr 8 an den Kühlmediumraum 11 und den ringspaltförmigen Kühlmittelkanal um das Siphonrohr 8 im Lagerbock 1 an einen korrespondierenden Kühlmittelkanal 9 im Rolleneinsatzstück 5 druckdicht ankuppelt.

Die eine druckdicht festlegbare Dichteinheit 7 umfasst in der gezeigten Ausführungsform einen Gleitringträger 7a, zwei Gleitringe 7b und 7c und einen Flansch 7d, welcher zur Aufnahme und Festlegung einer vorzugsweise als Kompensator ausgebildeten elastischen Hülse dient. Neben der bevorzugten Ausgestaltung der Hülse in Form eines Kompensators aus Edelstahl kann die elastische Hülse auch aus anderen, eine Elastizität verleihenden Materialien, beispielsweise in Form eines gegebenenfalls mit Gewebe verstärkten Gummihohlzylinders, der in den Flansch 7d eingepasst ist, ausgebildet sein. Hierdurch wird eine besondere Flexibilität der Hülse ermöglicht und der Verschleiß der erfindungsgemäßen Vorrichtung bei Belastung der Rolle wird vermindert.

Die elastische Hülse kann in dem gezeigten Ausführungsbeispiel in dem Flansch 7d lösbar festgelegt sein. Der Flansch 7d selbst kann über ein Gewinde in den Lagerbockzapfen 1 b eingeschraubt werden und beispielsweise über einen Sicherungsstift oder mittels Klebstoff gegen ein Herausdrehen gesichert sein. Wie ebenfalls dargestellt, kann der Flansch 7d auch dazu dienen, das Lager 3 zu stützen als auch zusätzlich über einen dem Rolleneinsatzstück zugewandten Kragen zu fixieren.

Der Lagerbock 1 gemäß dem dargestellten Ausführungsbeispiel weist zwei zur Lagerbockaufstandsfläche führende, in Bezug auf die Rollenachse senkrecht angeordnete nicht dargestellte, nicht in der Schnittebene liegende Kanalabschnitte auf. Der senkrechte Kanalabschnitt zur Zuführung von Kühlmedium ist bevorzugt so ausgebildet, bzw. angeordnet, dass in dem Lagerbock eine ausreichende Verwirbelung hervorgerufen wird und keine Luftblasen sich im Kanal und dem mit dem vorzugsweise vorhandenen Hohlraum 1 b zur Aufnahme von Kühlmedium im Lagerbock sammeln können. Im unteren Ende der senkrechten Kanalabschnitte können (nicht dargestellte) Verbindungsrohre eingesetzt und an die Lagerbockaufstandsfläche angeschlossen sein, welche wiederum an die (nicht dargestellte) Kühlmittelabfuhr und/oder Kühlmittelzufuhr im Boden gekuppelt sind. Die Verbindungsrohre können jeweils über an beiden stirnseitigen Endabschnitten vorgesehene (nicht dargestellte) O-Ringdichtungen gegen Lagerbock 1 und Lagerbockaufstandsfläche oder über einen O-Ring in der Hülse der Bohrung abgedichtet sein. Der Lagerbock ist über Verbindungsschrauben mit der Aufstandsfläche belastungssicher verschraubt.

Aus dem Lagerbock 1 ist über den dargestellten Kühlmittelkanal 8 die Zuführung des Kühlmediums in den Kühlmediumraum 11 im Rollenmantel 6 gewährleistet. Die Abführung erfolgt über den Umfangskanal 10 und den im Einsatzstück 5 nahezu radial verlaufenden Kanal 9 und den ringspaltförmigen Kühlmittelkanal um das Siphonrohr 8 zum Abführungskanal 12 im Lagerbock. Je nach Anforderungen und Ausführung kann die Zu- und Abführung des Kühlmediums auch in umgekehrter Fließrichtung durch Lagerbock, Dichteinheit und die vorgenannten Kühlmediumkanäle erfolgen.

Wie oben erwähnt, ist zwischen Rolleneinsatzstück 5 und Lagerbockzapfen 1 a eine Dichteinheit 7 vorgesehen, die gemäß dem Ausführungsbeispiel insbesondere einen auf dem, dem Flansch 7d zugewandten Bereich des Rolleneinsatzstückes 5 angeordneten Gleitring 7b,7c als Dichtelement und einen weiteren auf der Hülse 7d angeordneten Gleitring 7c als Dichtelement aufweist. Gemäß dem Ausführungsbeispiel sind daher die Dichtflächen der Dichtelemente 7b,7c senkrecht zur Drehachse der Rolle angeordnet. Diese geometrische Anordnung der Dichtflächen der Dichtelemente 7b,7c ist zwar bevorzugt, da so die auf die Dichtelemente wirkenden Kräfte besser kompensiert werden können, diese geometrische Anordnung der Dichtflächen der Dichtelemente 7b,7c ist jedoch bei der Rolle 1 nicht notwendigerweise erforderlich, wenn Dichteinheiten mit anders zusammenwirkenden Dichtelementen Verwendung finden.

Der Lagerbock 1 kann bevorzugt mit zur Rollenachse koaxialen (nicht dargestellte) Bohrungen versehen sein, die durch (nicht dargestellte) eindrehbare Verschlussstopfen verschließbar sind. Die Verschlussstopfen können bei Wartungsarbeiten an der Stranggießanlage ausgeschraubt werden, und so kann man die Zuführung eines Spülmediums wie Pressluft erlauben, um das Rolleninnere durch Ausblasen von dem Kühlwasser zu befreien und so die Wartungsarbeiten zu erleichtern. Ebenso kann über solche verschließbare Bohrungen Schmierfett für die Wälzlager 3 zugeführt werden.

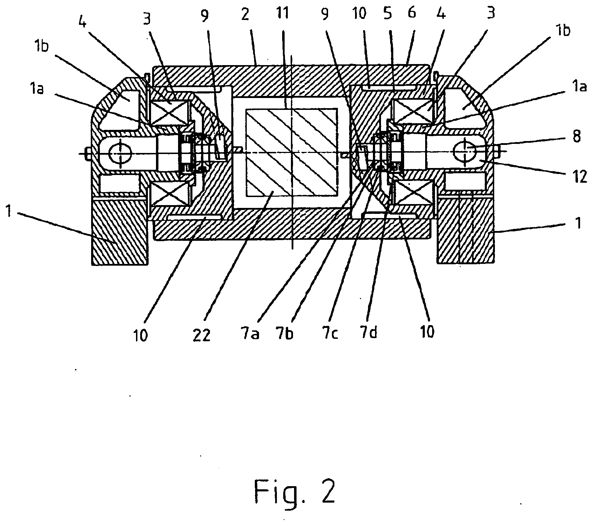

Bei der in Figur 2 gezeigten Ausführungsform ist ein Verdrängungskörper 22 in gestrichelter Form eingezeichnet, der je nach Größe des Hohlraums 11 vorgesehen sein kann und zur Verringerung der Menge an Kühlmedium, der Strömungsführung und Erhöhung der Strömungsgeschwindigkeit beiträgt.

Eine Fettzuführung kann ebenfalls über bodenseitig und im Fuß des Lagerbocks angeordnete Versorgungsleitungen erfolgen, um die Wälzlager zu schmieren und/oder die Labyrinthdichtung zu füllen und die Schutzwirkung zu erhöhen.

Für den Zusammenbau wie auch das Absetzen der Rolle können Werkzeuge an Lagerzapfen wie auch Bohrungen angesetzt werden.

Zwischen Lagerbock und Rollenmantel 6 ist bevorzugt eine umlaufende Labyrinthdichtung 19 vorgesehen, die ein Eindringen von Wasser und Schmutz in den Bereich des Lagers 3 verhindert und so zur Erhöhung der Lebensdauer des Lagers beiträgt.

An der Außenseite des Lagerbocks 1 kann auch ein (nicht dargestelltes) Einsatzstück vorgesehen sein, das am Lagerbock 1 über Befestigungsschrauben lösbar festgelegt ist. Infolgedessen kann ein Zugriff von außen auf die durch das Einsatzstück im montierten Zustand abgedeckten Komponenten, insbesondere auf die Dichteinheit, zur Durchführung von Wartungsarbeiten problemlos durch Lösen der Befestigungsschrauben und anschließendes Abnehmen des Einsatzstückes erfolgen, ohne dass hierzu ein Demontieren der gesamten Rollenanordnung notwendig ist. Das Einsatzstück kann auch als Zentrierzapfen dienen, um beim Zusammenbau der Rollenanordnung die Anordnung der Bauteile zueinander zu erleichtern.

Bei der in Fig. 2 gezeigten Ausführungsform der erfindungsgemäßen Rollenanordnung ist eine Rolle 2 beiderseits über Wälzlager oder Gleitlager 3 auf den Lagerbockzapfen 1a der Lagerböcke 1 gelagert und wird auf der einen Seite ausgehend von dem den nicht dargestellten senkrechten Kanal von der Lagerbockaufstandfläche mit aus dem Lagerbockhohlraum 1 b über Kanal 13, Mono-Dichteinheit 7, Kanal 9 und Kanal 10 in den Kühlmittelraum 11, der teilweise mit -nicht dargestellten- Füllkörpern zur Steuerung der Fließrichtung und Fließgeschwindigkeit des einfließenden Volumens gefüllt sein kann, mit zufließenden Kühlmedium versorgt. Das in den Raum 11 zufließende Kühlmedium wird über die entsprechenden Kanäle und Bauelemente auf der gegenüberliegenden Seite der Rolle in umgekehrter Reihenfolge über Kanal 10, Kanal 9,, Dichteihheit 7, Kanal 13 und Kühlmittelraum 1 b und den nicht dargestellten senkrechten Kanal zur Lagerbockaufstandfläche abgeführt. Aufgrund der symmetrischen Bauweise der gesamten Rollenanordnung mit bevorzugt baugleichen Einsatzstücken und Lagerböcken ist eine Strömungsumkehr ebenso möglich wie eine seitenverkehrte Montage der Rollenanordnung.

Wie anhand der Fig. 1 und 2 ersichtlich wird, ermöglichen die Ausführung der Rolle als auch der in der Rollenanordnung verwendete Lagerbock infolge der Auslegung der kühlmittelführenden Kanäle und Hohlräume einen optimierten Wärmeabtransport von den dem Strang zugewandten Oberflächen bei gleichzeitiger Kühlung der verwendeten Lager und Dichtelemente. Auf diese Weise werden infolge des verbesserten Temperaturprofils an der Rollenoberfläche ebenso eine höhere Oberflächengüte des geführten Stranges sowie eine verlängerte Rollenstandzeit erzielt. So ist auch eine Strangführung ohne Sprühwasser ermöglicht.

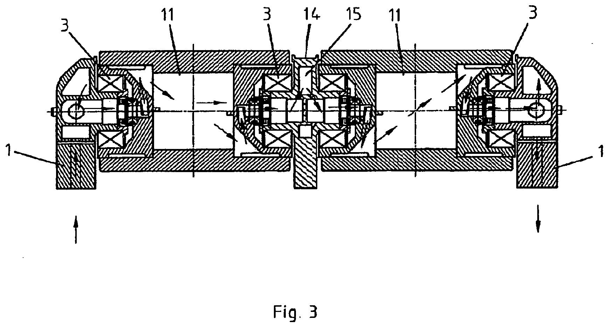

Bei der in Fig. 3 gezeigten Ausführungsform der erfindungsgemäßen Rollenanordnung ist die in Fig. 2 gezeigte Rollenanordnung um ein "Verlängerungs"-Element aus einem in der Querschnittsansicht kreuzförmigem Mittenlagerbock 14 und einer weiteren Rolle 2 verlängert, so dass auch breitere Strangformate mit beispielsweise rechteckigem Querschnitt wie bei einer Bramme geführt werden können. Der Mittenlagerbock 14 hat bevorzugt einen strangseitig angeordneten Kühlmediumhohlraum 15, der, bevorzugt mittig unterteilt, wie in Fig. 3 gezeigt von dem Kühlmedium in Pfeilrichtung durchströmt werden kann. In Abhängigkeit von den gewünschten Strangformaten können Rollenbreite und Anzahl der Rollen variiert werden, so dass prinzipiell auch mehr als 2 Rollen in einer Rollenanordnung angeordnet sein können.

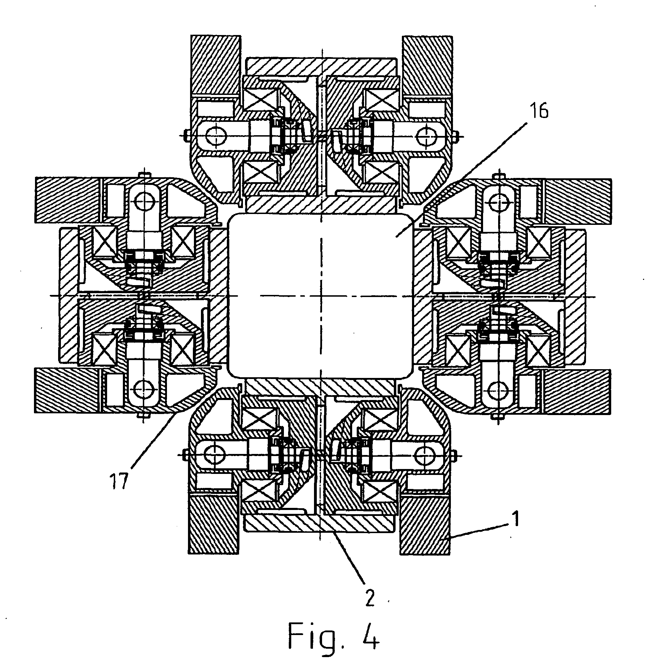

Bei der in Fig. 4 gezeigten Ausführungsform der erfindungsgemäßen Strangführungseinheit sind vier der prinzipiell in Fig. 2 gezeigten Rollenanordnungen, in Fig. 4 mit einem schmaleren Rollenmantel, zur Führung eines Stranges mit quadratischem Querschnitt jeweils im rechten Winkel in einer Ebene zueinander angeordnet. Die baugleichen Rolleneinsatzstücke 5 sind in dem Rollenmantel 6 zueinander um 180° verdreht angeordnet, wobei die Positioniernasen 5a ein zueinander ausgerichtetes Einschieben ermöglichen. Infolge dieser Anordnung der Rolleneinsatzstücke zueinander wird der vom Rollenmantel 6 umfasste Kühlmittelraum 11 optimiert durchströmt und die Wärme abgeführt.

Aufgrund der Gestaltung der Lagerböcke mit einer Abrundung, bzw.Abflachung/Abschrägung 17 an der dem Strang 16 und der Aufstandfläche abgewandten Seite des Lagerbockes 1 ist eine eng beabstandete Anordnung der Rollenanordnungen möglich, und so kann der Strang 16 über nahezu die gesamte Fläche jeder Seite geführt werden. Aufgrund dieser Ausgestaltung der Lagerböcke ist es auch erst möglich, alle vier Rollenanordnungen in einer Ebene anzuordnen und es ist nicht erforderlich, wie im Stand der Technik bekannt, die Paare der gegenüberliegenden Rollen zu den im rechten Winkel dazu angeordneten Rollenpaaren um eine Strecke versetzt anzuordnen zu müssen und/oder zwei der gegenüberliegenden Rollenpaare in der Länge bei Anordnung in einer Ebene so kürzen zu müssen, dass sich durch den ferrostatischen Innendruck die dünne Haut des Stranges auf der Außenseite verformt und/oder die Lagerung wie auch die Wasserübergabe durch die unvorteilhafte Anordnung der Lagerböcke durch Überhitzen zerstört werden. So ist es wiederum möglich, solche Strangsführungseinheiten in einem zueinander kleineren Abstand als im Stand der Technik vorzusehen und so wiederum eine verbesserte Strangführung zu ermöglichen.

Bei der Technologie eines elektromagnetischen Strangrührers, bei der der Flüssigteil im Stranginneren durch Induzieren von Magnetfeldern zum Rotieren gebracht wird, ist es maßgeblich, dass die Rührerspulen so nahe wie möglich zur Strangoberfläche angeordnet werden. Dabei ist aus Platz- und Lebensdauergründen die oben erwähnte Rollenanordnung die Lösung für solche Strangrührer für große Strangformate, die zwingend unterstützt werden müssen.

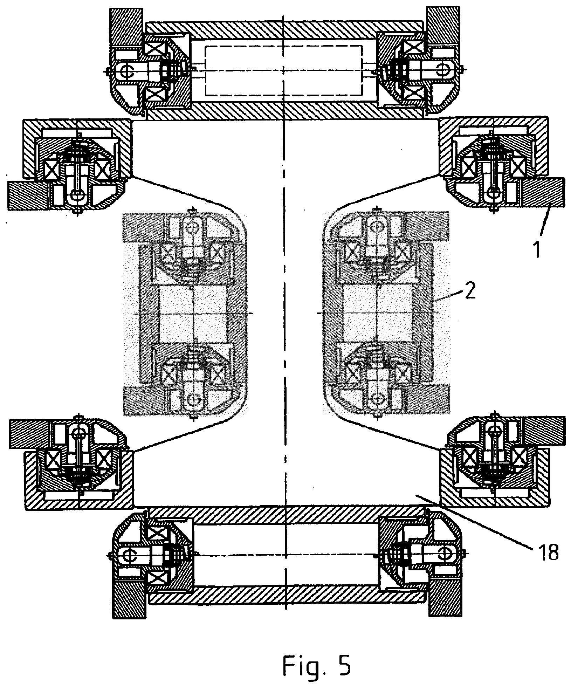

Bei der in Fig. 5 gezeigten Ausführungsform der erfindungsgemäßen Strangführungseinheit sind vier der prinzipiell in Fig. 1 gezeigten Rollenanordnungen mit einem schmaleren Rollenmantel und mit je zwei Lagerböcken abwechselnd zu der prinzipiell in Fig. 2 gezeigten Ausführungsform der erfindungsgemäßen Rollenanordnung mit je nur einem Lagerbock um ein Strangprofil 18 mit doppel-T-förmigem Querschnitt in einer Ebene zueinander angeordnet. Auch bei dieser Strangform ermöglicht die erfindungsgemäße Rolleanordnung eine Verbesserung der Führung des Stranges und der Temperatur sowie die Lebensdauererhöhung der Führungsrolle. Zusätzlich ist durch die Rollenkühlung eine weiche Strangkühlung und ein Giessen ohne sekundäres Kühlwasser möglich. Die prinzipiell in Fig. 1 gezeigte Ausführungsform der erfindungsgemäßen Rollenanordnung mit je nur einem Lagerbock dient dabei zur Führung und Stützung der Schmalseiten des Profils.

### Bezugszelchenliste

- 1: Lagerbock mit
1a Lagerbockzapfen, und
1b Lagerbockhohlraum
- 2: Rolle
- 3: Wälzlager
- 4: Wälzlageraufnahme
- 5: Rolleneinsatzstück mit
5a Positioniernase
- 6: Rollenmantel
- 7: Dichteinheit aus
7a Träger
7b Gleitring
7c Gleitring
7d Flansch mit elastischer Hülse
- 8: Siphonrohr
- 9: Kühlmittelkanal im Einsatzstück
- 10: Unfangskanal
- 11: Kühlmittelraum
- 12: Abführungskanal
- 13: Kanal im Lagerbock
- 14: Mittenlagerbock
- 15: Kühlmediumhohlraum
- 16: Knüppelstrang
- 17: Abrundung des Lagerbockes
- 18: Beam-Blank-Strang
- 19: Labyrinthdichtung
- 20: Fettzuführung für Lager
- 21: Zentrierzapfen
- 22: Verdrängungskörper

## Patentansprüche

1. Rollenanordnung für eine Stranggiessanlage, mit:
- einem Lagerbock (1) mit einem Lagerbockzapfen (1a),
- einer von dem Lagerbockzapfen (1a) und dem Rollenlager (3) getragenen Rolle (2), wobei die Rolle (2) eine mit einem Kühlmedium versorgbare zapfenlose Rolle (2) mit einem rotationssymmetrischen Rollenmantel (6) zur Aufnahme von Kühlmedium und mit einem Rolleneinsatzstück (5), ist,an dem eine Aufnahme (4) für ein auf einem Lagerbockzapfen getragenes Rollenlager (3) ausgebildet ist, wobei das Rolleneinsatzstück (5) innerhalb des Rollenmantels (6) angeordnet und daran druckdicht festgelegt ist, wobei Rolleneinsatzstück (5) und Rollenmantel (6) einen Hohlraum (11) zur Aufnahme des Kühlmediums ausbilden, ist;
wobei an einem Ende der Rolle zwischen Rolleneinsatzstück (5) und Lagerbockzapfen (1a) eine druckdicht festlegbare Duo-Dichteinheit (7a,7b,7c,7d) angeordnet ist, welche jeweils einen Kühlmittelkanal (12,13) im Lagerbock an jeweils einen korrespondierenden Kühlmittelkanal (9,11) im Rolleneinsatzstück (5) zur Zu-bzw. Abführung des Kühlmediums druckdicht ankuppelt und das andere Ende des Rollenmantels, vorzugsweise durch einen Deckel, verschlossen ist.

2. Rollenanordnung für eine Stranggiessanlage, mit:
- zwei Lagerböcken (1) mit je einem Lagerbockzapfen (1a),
- einer von den Lagerbockzapfen (1a) und Rollenlagern (3) getragenen Rolle (2)
wobei die Rolle (2) eine mit einem Kühlmedium versorgbare zapfenlose Rolle (2) mit einem rotationssymmetrischen Rollenmantel (6) zur Aufnahme von Kühlmedium und mit einem ersten Rolleneinsatzstück (5) und einem zweiten Rolleneinsatzstück (5), an dem jeweils eine Aufnahme (4) für ein auf einem Lagerbockzapfen getragenes Rollenlager (3) ausgebildet ist, wobei die Rolleneinsatzstücke (5) innerhalb des Rollenmantels (6) angeordnet und daran druckdicht festgelegt sind und wobei die Rolleneinsatzstücke (5) und Rollenmantel (6) einen Hohlraum (11) zur Aufnahme des Kühlmediums ausbilden, ist, wobei an jedem Ende der Rolle (2) zwischen Rolleneinsatzstück (5) und Lagerbockzapfen (1a) eine druckdicht festlegbare Mono-Dichteinheit (7a,7b,7c,7d) angeordnet ist, welche einen Kühlmittelkanal (12) im Lagerbock (1) an jeweils einen korrespondierenden Kühlmittelkanal (9) im Rolleneinsatzstück (5) zur Durchführung des Kühlmediums druckdicht ankuppelt.

3. Rollenanordnung nach Anspruch 2, wobei die Kühlmittelkanäle (12) jeweils an den Kühlmittelkanal zur Zuführung des Kühlmediums in einer zugeordneten ersten Dichteinheit (7a,7b,7c,7d) bzw. den Kühlmittelkanal zur Abführung des Kühlmediums in der zugeordneten zweiten Dichteinheit (7a,7b,7c,7d) so ankuppeln, dass das der Rolle (2) im Betrieb einenends zugeführte Kühlmedium über den Kühlmittelkanal (9,10) im ersten Rolleneinsatzstück dem auf der Innenseite des Rollenmantels (6) angeordneten Kühlmittelraum (11) zugeführt wird und anderenends über den Kühlmittelkanal 12 zur Abführung des Kühlmediums aus dem Kühlmittelraum (11) über den Kühlmittelkanal (12) im zweiten Rolleneinsatzstück (5) abgeführt wird.

4. Rollenanordnung für eine Stranggiessanlage nach Anspruch 1, 2 oder 3, wobei das Rollenlager (3) radial um die Dichteinheit (7a,7b,7c,7d) angeordnet ist.

5. Rollenanordnung für eine Stranggiessanlage nach Anspruch 4, wobei das Rollenlager (3) zumindest teilweise von der Dichteinheit (7a,7b,7c,7d) getragen wird.

6. Rollenanordnung nach einem der Ansprüche 1 bis 5, wobei die Dichteinheit (7a,7b,7c,7d) eine elastische Hülse (7d), vorzugsweise in Form eines Kompensators, aufweist.

7. Rollenanordnung nach Anspruch 6, wobei die Dichteinheit zwei aufeinander ablaufende Gleitringe (7b,7c) als Dichtelemente umfasst, wobei der eine Gleitring (7b) direkt von der Rolle (2) oder von dem Rolleneinsatzstück (5) und der andere Gleitring (7c) von der elastischen Hülse (7d) getragen wird.

8. Rollenanordnung für eine Stranggiessanlage nach einem der Ansprüche 1 bis 6, wobei der Lagerbock (1) einen von Kühlmedium durchströmbaren Hohlraum (1b) hat.

9. Rollenanordnung für eine Stranggiessanlage nach einem der Ansprüche 2 oder 3, mit:
- mindestens einem weiteren Lagerbock (14),
- mindestens einer weiteren von den Lagerböcken(1;14) getragenen Rolle (2) nach einem der Ansprüche 2 bis 5, wobei zwischen benachbarten Rollen ein Lagerbock (2), der die benachbarten Rollen trägt, angeordnet ist und die Rollen (2) auf einer Drehachse liegen,
- wobei an jedem Ende der Rollen zwischen Rolleneinsatzstück und Lagerbockzapfen(1a) eine druckdicht festlegbare Mono-Dichteinheit (7a,7b,7c,7d) angeordnet ist, welche einen Kühlmittelkanal (12) im Lagerbock an den jeweils einen korrespondierenden Kühlmittelkanal (9) im Rolleneinsatzstück (5) zur Durchführung des Kühlmediums druckdicht ankuppelt.

10. Rollenanordnung nach Anspruch 9, bei dem der zwischen den Rollen (2) angeordnete Lagerbock (14) einen von Kühlmedium durchströmbaren vorzugsweise strangseitig angeordneten Hohlraum (15) aufweist.

11. Strangführungseinheit zur Führung eines Stranges in einer Stranggiessanlage mit mindestens zwei Rollenanordnungen nach einem der Ansprüche 2 bis 10, bei der Drehachsen der Rollen (2) vorzugsweise in einer Ebene liegen, zur Führung von stranggegossenen Langprodukten.

## Claims

1. A roller arrangement for a continuous casting installation comprising:
- one bearing block (1) having a bearing block journal (1a),
- a roller (2) carried by the bearing block journal (1a) and the roller bearing (3),
wherein the roller (2) is a journal-less roller (2), which can be supplied with a coolant, comprising a rotationally symmetrical roller casing (6) for receiving coolant and comprising a roller insert piece (5) on which there is provided a receiving means (4) for a roller bearing (3) carried on a bearing block journal, wherein the roller insert piece (5) is arranged within the roller casing (6) and is pressure-tightly fixed thereto, wherein the roller insert piece (5) and the roller casing (6) form a cavity (11) for receiving the coolant.
wherein arranged at one end of the roller between the roller insert piece (5) and the bearing block journal (1a) is a duo sealing unit (7a, 7b, 7c, 7d) which can be pressure-tightly fixed and which respectively pressure-tightly couples a coolant passage (12, 13) in the bearing block (1) to the respective one corresponding coolant passage (9) in the roller insert piece (5) for the feed and discharge respectively of the coolant and the other end of the roller casing is preferably closed by a cover.

2. A roller arrangement for a continuous casting installation comprising:
- two bearing blocks (1) each having a bearing block journal (1a),
- a roller (2) carried by the bearing block journals (1a) and roller bearings (3),
wherein the roller (2) is a journal-less roller (2), which can be supplied with a coolant, comprising a rotationally symmetrical roller casing (6) for receiving coolant and comprising a first roller insert piece (5) and a second roller insert piece (5) on which there is provided a receiving means (4) for a roller bearing (3) carried on a bearing block journal, wherein the roller insert pieces (5) are arranged within the roller casing (6) and are pressure-tightly fixed thereto, wherein the roller insert pieces (5) and the roller casing (6) form a cavity (11) for receiving the coolant,
wherein arranged at each end of the roller (2) between the roller insert piece (5) and the bearing block journal (1a) is a mono sealing unit (7a, 7b, 7c, 7d) which can be pressure-tightly fixed and which pressure-tightly couples a coolant passage (12) in the bearing block (1) to respectively one corresponding coolant passage (9) in the roller insert piece (5) for conducting the coolant.

3. The roller arrangement according to claim 2, wherein the coolant passages (12) respectively connect to the coolant passage for feeding the coolant in an associated first sealing unit (7a, 7b, 7c, 7d) and the coolant passage for discharge of the coolant in the associated second sealing unit (7a, 7b, 7c, 7d) such that the coolant which is fed at one end to the roller (2) in operation is fed by way of the coolant passage (9, 10) in the first roller insert piece to the coolant cavity (11) arranged on the inside of the roller casing (6) and is discharged at the other end by way of the coolant passage (12) for discharge of the coolant from the coolant cavity (11) by way of the coolant passage (12) in the second roller insert piece (5)

4. A roller arrangement for a continuous casting installation according to claim 1, 2 or 3, wherein the roller bearing (3) is arranged radially around the sealing unit (7a, 7b, 7c, 7d).

5. A roller arrangement for a continuous casting installation according to claim 4, wherein the roller bearing (3) is at least partially carried by the sealing unit (7a, 7b, 7c, 7d).

6. A roller arrangement according to one of claims 1 to 5, wherein the sealing unit (7a, 7b, 7c, 7d) has an elastic sleeve (7d), preferably in the form of a compensator.

7. A roller arrangement according to claim 6, wherein the sealing unit includes two sliding rings (7b, 7c) which run against each other as sealing elements, wherein the one sliding ring (7b) is carried directly by the roller (2) or by the roller insert piece (5) and the other sliding ring (7c) is carried by the elastic sleeve (7d).

8. A roller arrangement for a continuous casting installation according to one of claims1 to 6, wherein the bearing block (1) has a cavity (1b) through which coolant can flow.

9. A roller arrangement for a continuous casting installation according to one of claims 2 or 3 comprising:
- at least one further bearing block (14),
- at least one further roller (2) according to one of claims 2 to 5 and carried by the bearing blocks (1; 14), wherein arranged between adjacent rollers is a bearing block (14) which carries the adjacent rollers and the rollers (2) are on an axis of rotation,
wherein arranged at each end of the rollers between the roller insert piece and the bearing block journal (1a) is a mono sealing unit (7a, 7b, 7c, 7d) which can be pressure-tightly fixed and which pressure-tightly connects a coolant passage (12) in the bearing block to the respective one corresponding coolant passage (9) in the roller insert piece (5) for carrying the coolant.

10. A roller arrangement according to claim 9, wherein the bearing block (14) arranged between the rollers (2) has a cavity (15) through which coolant can flow and which is preferably arranged at the strand side.

11. A strand guide unit for guiding a strand in a continuous casting installation comprising at least two roller arrangements according to one of claims 2 to 10, wherein axes of rotation of the rollers (2) preferably lie in one plane, for guiding continuously cast long products.

## Revendications

1. Agencement de rouleau pour une installation de coulée continue, avec :
- un support de palier (1) avec un tourillon (1a) de support de palier
- un rouleau (2), porté par le tourillon (1a) de support de palier et le palier de rouleau (3),
sachant que le rouleau (2) est un rouleau (2) sans tourillon, avec une enveloppe de rouleau (6) symétrique en rotation, destinée à recevoir le réfrigérant, et avec au moins une pièce d'insertion de rouleau (5), sur laquelle est formé un logement (4) pour un palier de rouleau (3) porté sur un tourillon de support de palier, sachant que la pièce d'insertion de rouleau (5) est disposée à l'intérieur de l'enveloppe de rouleau (6) et y est fixée en étanchéité à la pression, sachant que la pièce d'insertion de rouleau (5) et l'enveloppe de rouleau (6) forment une cavité (11) pour recevoir le réfrigérant
sachant qu'une duo-unité d'étanchéité (7a, 7b, 7c, 7d), pouvant être fixée en étanchéité à la pression, est disposée au moins à une extrémité du rouleau entre la pièce d'insertion de rouleau (5) et le tourillon (1a) de support de palier, laquelle unité accouple en étanchéité à la pression au moins un canal de réfrigérant (12, 13) dans le support de palier (1) à au moins un canal de réfrigérant correspondant (9) dans la pièce d'insertion de rouleau pour amener ou évacuer le réfrigérant et que l'autre extrémité de l'enveloppe de rouleau est fermée, de préférence par un couvercle.

2. Agencement de rouleau pour une installation de coulée continue, avec :
- deux supports de palier (1) avec chacun un tourillon (1a) de support de palier
- un rouleau (2) porté par les tourillons (1a) de support de palier et par des paliers de rouleau (3),
sachant que le rouleau (2) étant conçu sous la forme d'un rouleau (2) sans tourillon, avec une enveloppe de rouleau (6) symétrique en rotation, destinée à recevoir du réfrigérant et avec une première pièce d'insertion de rouleau (5) et une deuxième pièce d'insertion de rouleau (5) sur chacune desquelles est conçue au moins un logement (4) pour un palier de rouleau (3) porté sur un tourillon de support de palier, sachant que les pièces d'insertion de rouleau (5) sont disposées à l'intérieur de l'enveloppe de rouleau (6) et y sont fixées en étanchéité à la pression, sachant que les pièces d'insertion de rouleau (5) et l'enveloppe de rouleau (6) forment une cavité (11) pour recevoir le réfrigérant,
sachant que sur chaque extrémité du rouleau (2), entre la pièce d'insertion de rouleau (5) et le tourillon (1a) de support de palier est placée une mono-unité d'étanchéité (7a, 7b, 7c, 7d) pouvant être fixée en étanchéité à la pression, laquelle unité accouple en étanchéité à la pression au moins un canal de réfrigérant (12) dans le support de palier (1) à chaque fois un canal de réfrigérant correspondant (9) dans la pièce d'insertion de rouleau (5) pour le passage du réfrigérant.

3. Agencement de rouleau selon la revendication 2, les canaux de réfrigérant (12) accouplant chacun sur le canal de réfrigérant pour l'alimentation du réfrigérant dans une première unité d'étanchéité (7a, 7b, 7c, 7d) associée ou sur le canal de réfrigérant pour l'évacuation du réfrigérant dans la deuxième unité d'étanchéité (7a, 7b, 7c, 7d) associée de telle sorte que le réfrigérant alimenté sur une extrémité du rouleau en fonctionnement soit alimenté par l'intermédiaire du canal de réfrigérant (9, 10) dans la première pièce d'insertion de rouleau (5) vers la chambre de réfrigérant (11) disposée sur le côté intérieur de l'enveloppe de rouleau (6) et, à l'autre extrémité, soit évacué, par l'intermédiaire du canal de réfrigérant (12) destiné à évacuer le réfrigérant, de la chambre de réfrigérant (11) via le canal de réfrigérant (12) dans la deuxième pièce d'insertion de rouleau (5).

4. Agencement de rouleau pour une installation de coulée continue selon la revendication 1 ou 3, sachant que le palier de rouleau (3) est disposé radialement autour de l'unité d'étanchéité (7a, 7b, 7c, 7d).

5. Agencement de rouleau pour une installation de coulée continue selon la revendication 4, sachant que le palier de rouleau (3) est porté au moins partiellement par l'unité d'étanchéité (7a, 7b, 7c, 7d).

6. Agencement de rouleau selon l'une des revendications 1 à 5, sachant que l'unité d'étanchéité (7a, 7b, 7c, 7d) présente une douille élastique (7d), de préférence sous la forme d'un compensateur.

7. Agencement de rouleau selon la revendication 6, sachant que l'unité d'étanchéité comprend comme éléments d'étanchéité deux bagues glissantes (7b, 7c) roulant l'une sur l'autre, sachant que l'une (7b) des bagues glissantes est directement portée par le rouleau (2) ou par la pièce d'insertion de rouleau (5), et que l'autre bague glissante (7c) est portée par la douille élastique (7d).

8. Agencement de rouleau pour une installation de coulée continue selon l'une des revendications 1 à 6, sachant que le support de palier (1) possède une cavité (1b) pouvant être traversée par le flux de réfrigérant.

9. Agencement de rouleau pour une installation de coulée continue selon l'une des revendications 2 ou 3, avec :
- au moins un support de palier supplémentaire (14),
- au moins un rouleau supplémentaire (2) selon l'une des revendications 2 à 5, porté par les supports de palier (1 ; 14), sachant qu'un support de palier (14) qui porte les rouleaux voisins est disposé entre les rouleaux voisins, et que les rouleaux (2) se situent sur un axe de rotation,
sachant qu'une unité d'étanchéité simple (7a, 7b, 7c, 7d), pouvant être fixée en étanchéité à la pression, est disposée à chaque extrémité des rouleaux entre la pièce d'insertion de rouleau et le tourillon (1a) de support de palier, unité qui relie en étanchéité à la pression un canal de réfrigérant (12) dans le support de palier au canal de réfrigérant respectif correspondant (9) dans la pièce d'insertion de rouleau (5) afin de faire passer le réfrigérant.

10. Agencement de rouleau selon la revendication 9, sur lequel le support de palier (14) disposé entre les rouleaux (2) présente une cavité (15) pouvant être traversée par le flux de réfrigérant et disposée de préférence du côté de la barre.

11. Unité de guidage de barre pour le guidage d'une barre dans une installation de coulée continue avec au moins deux agencements de rouleaux selon l'une des revendications 2 à 10, sur laquelle les axes de rotation des rouleaux (2) se situent de préférence dans un plan, afin de guider des produits oblong coulés en continu.
